Europäisches Patentamt

European Patent Office

Office européen des brevets

(19)

(11) Veröffentlichungsnummer: **0 248 184**

**A2**

(12) # EUROPÄISCHE PATENTANMELDUNG

(21) Anmeldenummer: **87105774.1**

(22) Anmeldetag: **18.04.87**

(51) Int. Cl.⁴: **B23Q 9/02** , B23Q 1/18

(30) Priorität: **05.06.86 DE 3619000**

(43) Veröffentlichungstag der Anmeldung:
**09.12.87 Patentblatt 87/50**

(84) Benannte Vertragsstaaten:
**AT BE CH DE ES FR GB GR IT LI LU NL SE**

(71) Anmelder: **L. & C. Steinmüller GmbH**
**Postfach 10 08 55/10 08 65 Fabrikstrasse 1**
**D-5270 Gummersbach 1(DE)**

(72) Erfinder: **Rabe, Gerd**
**Am Fliederbusch 9**
**D-5882 Meinerzhagen 2(DE)**
Erfinder: **Pollak, Gerd**
**Furtwängler Strasse 10**
**D-5270 Gummersbach 1(DE)**

(74) Vertreter: **Carstens, Wilhelm, Dipl.-Phys.**
**L. & C. Steinmüller GmbH Patentabteilung**
**Postfach 10 08 55/10 08 65**
**D-5270 Gummersbach 1(DE)**

(54) **Bearbeitungsvorrichtung mit einem in drei zueinander senkrechten Koordinaten verschiebbaren Werkzeugträger.**

(57) Bei einer Bearbeitungsvorrichtung mit einem in drei zueinander senkrechten Koordinaten (X, Y, Z) mittels dreier Linearführungen (23, 15, 28) und zugeordneten Antrieben (25, 19, 30) auf einem Vorrichtungsrahmen verschiebbaren Werkzeugträger (24) ist erfindungsgemäß vorgesehen, daß der Vorrichtungsrahmen (1, 8) im wesentlichen U-förmig ausgebildet ist, daß der Werkzeugträger (24) formschlüssig gehalten auf einem sich quer zu den Schenkeln (1a, 8a; 1b, 8b) erstreckenden Schlitten (23) in der ersten Koordinatenrichtung (X) und der dritten Koordinatenrichtung (Z) verschiebbar ist, der mit seinen Enden (22) formschlüssig auf den Schenkeln (1a, 8a; 1b, 8b) des Rahmens gehalten längs der Schenkel in der zweiten Koordinatenrichtung (Y) verschiebbar ist.

In bevorzugter Weise besteht der Vorrichtungsrahmen aus einem U-förmigen Traggestell (1) und einem auf diesen verschwenkbaren U-förmigen Drehgestell (8), auf dem der Werkzeugträger (24) in den drei Koordinaten-Richtungen verschiebbar ist.

EP 0 248 184 A2

## Bearbeitungsvorrichtung mit einem in drei zueinander senkrechten Koordinaten verschiebbaren Werkzeugträger

Die Erfindung betrifft eine Bearbeitungsvorrichtung mit einem in drei zueinander senkrechten Koordinaten mittels dreier Linearführungen und zugeordneten Antrieben auf einem Vorrichtungsrahmen verschiebbaren Werkzeugträger.

Solche Werkzeugmaschinen sind üblicherweise stationär angeordnet und der zu bearbeitende Gegenstand wird zu der Bearbeitungsvorrichtung transportiert. Es besteht aber ein Bedarf nach Bearbeitungsvorrichtungen, die zu dem zu bearbeitenden Gegenstand transportiert werden können und auf einfache Weise am Ort des Gegenstandes mit diesem in Bearbeitungszuordnung gebracht werden können, z.B. einem auf einem Kesselmantel angeordneten Stutzen so zugeordnet werden, daß dessen freie Stirnfläche bearbeitet werden kann.

Es ist daher die Aufgabe der vorliegenden Erfindung, eine Bearbeitungsvorrichtung der im Oberbegriff des vorstehenden Anspruches 1 genannten Art zu geben, die transportabel ist und auf einfache Weise in Bearbeitungszuordnung zu dem zu bearbeitenden Gegenstand gebracht werden kann.

Diese Aufgabe wird dadurch gelöst, daß der Vorrichtungsrahmen im wesentlichen U-förmig ausgebildet ist, daß der Werkzeugträger formschlüssig gehalten auf einem sich quer zu den Schenkeln des Vorrichtungsrahmens erstreckenden Schlitten in der ersten Koordinatenrichtung und der dritten Koordinatenrichtung verschiebbar ist, der mit seinen Enden formschlüssig auf den Schenkeln des Rahmens gehalten längs der Schenkel in der zweiten Koordinatenrichtung verschiebbar ist.

Durch die formschlüssige Halterung des Werkzeugträgers auf dem Schlitten und des Schlittens auf den Schenkeln des Vorrichtungsrahmens kann die Bearbeitungsvorrichtung transportiert werden.

Durch die U-förmige Gestaltung des Vorrichtungsrahmens kann die Vorrichtung so über der zu bearbeitenden Stelle der Unterlage oder an dem zu bearbeitenden Gegenstand so positioniert werden, daß die Bearbeitungsfläche sich in dem von den beiden Schenkeln und deren Verbindungsabschnitt begrenzten Arbeitsraum befindet.

Vorzugsweise besteht der Vorrichtungsrahmen aus einem U-förmigen Traggestell und einem U-förmigen Drehgestell, wobei das Drehgestell auf der Oberfläche des Traggestells gleitend aufsitzt und im Bereich des freien Endes eines Schenkels im Bereich des freien Endes des zugeordneten Schenkels des Traggestells schwenkbar gelagert ist und der Werkzeugträger auf dem Drehgestell in den drei Koordinaten-Richtungen verschiebbar angeordnet ist, und daß an den beiden Gestellen angreifende Einrichtungen zum Festlegen des Drehgestells auf dem Traggestell in einer vorgegebenen Schwenkstellung vorgesehen sind.

Diese bevorzugte Anordnung bietet den großen Vorteil, daß nach Ablage des Traggestells auf einer Unterlage in einer Position das Drehgestell noch verschwenkt werden kann. D.h. der Arbeitsbereich des Werkzeugträgers ist nicht durch die Position des Traggestells festgelegt, sondern wird durch die Position des Drehgestells auf dem Traggestell festgelegt.

Zum Abstützen der Vorrichtung ist es von Vorteil, wenn zumindest an den freien Enden der Schenkel und etwa in der Mitte des Schenkelverbindungsabschnittes des Traggestelles sich in Richtung der dritten Koordinate erstreckende und in ihrer Höhe manuell oder antriebsmäßig verstellbare Stützen vorgesehen sind. Durch diese drei Stützen kann auf sichere Weise die gewünschte Ebene der ersten und der zweiten Koordinate eingestellt werden.

Um diese Einstellung weiter zu sichern, ist es von Vorteil, daß auf jedem Schenkel des Traggestelles zusätzlich jeweils eine weitere einstellbare Stütze vorgesehen ist. Mit diesen weiteren Stützen kann die durch die ersten drei Stützen erreichte Einstellung gesichert werden.

Um die Bearbeitungsvorrichtung auf der Unterlage weiter zu sichern, ist es von Vorteil, wenn die Stützen mit Haft-oder Haltefüßen versehen sind. Diese können pneumatisch oder magnetisch sein (vgl. z.B. die anhängige Patentanmeldung der Anmelderin mit dem Titel "Vorrichtung zum Halten eines Gegenstandes mittels einer Magnetspannplatte" und dem Anmeldetag vom 23.05.1986.

Ein besonders sicherers Verschieben des Schlittens längs der Schenkel wird erreicht, wenn die freien Enden des Schlittens mit zwei sich längs der Schenkel des Drehgestells erstreckenden Spindeln in Antriebseingriff stehen, die synchron antreibbar sind.

Die Spindeln können jeweils eigene Antriebe aufweisen, die miteinander synchronisiert sind. Es ist jedoch bevorzugt, daß die Spindeln über Umlenkgetriebe und eine die beiden Getriebe miteinander koppelnde und sich längs des Verbindungsabschnittes der Schenkel erstreckende Welle miteinander gekoppelt sind und die Spindeln über einen dem einen Getriebe zugeordneten Antriebsmotor antreibbar sind.

Zur Verbesserung der Transporteigenschaften ist es von Vorteil, daß der Spindelantrieb an dem gebundenen Ende des einen Schenkels des Drehgestelles angeordnet ist und der Antrieb für die Bewegung des Werkzeugträgers in Richtung der ersten Koordinate längs des Schlittens an dem Ende des Schlittens angeordnet ist, das auf dem anderen Schenkel des Drehgestelles verschiebbar ist. Auf diese Weise wird eine gleichmäßigere Gewichtsverteilung auf dem Vorrichtungsrahmen erreicht, da die Antriebe nicht unwesentlich zum Gewicht der Bearbeitungsvorrichtung beitragen. Der Werkzeugträger selbst befindet sich in Transportstellung in der Mitte des Schlittens, d.h. etwa in der Mitte zwischen den beiden Schenkeln des Drehgestelles. Dieses wiederum befindet sich in Transportstellung bevorzugt in der Schwenkstellung, in der die beiden U-förmigen Gestelle im wesentlichen dieselbe Ausrichtung aufweisen.

Eine besonders einfache Erfassung des Verschiebweges in Richtung der ersten Koordinate wird erreicht, wenn sich längs des einen Schenkels des Drehgestelles ein Meßmaßstab erstreckt, der von einem auf dem einen Ende des Schlittens angeordneten Meßwertaufnehmer abtastbar ist.

Auf dem Werkzeugträger kann eine Werkzeugbaugruppe einschließlich einer Werkzeugspindel und eines Werkzeugdrehantriebes so angeordnet sein, daß sich die Werkzeugachse in Richtung der dritten Koordinate erstreckt.

Es ist aber auch möglich, daß die Werkzeugbaugruppe so auf dem Werkzeugträger angeordnet ist, daß sich die Werkzeugdrehachse in Richtung der zweiten oder dritten Koordinate erstreckt.

Zur Erleichterung des Angriffes von Hebezeugen an der Transportablen Bearbeitungsvorrichtung kann es zweckmäßig sein, daß an dem Traggestell ein sich zwischen dessen Schenkeln erstreckender und an diesen schwenkbar angelenkter Handhabungsbügel vorgesehen ist.

Besonders einfache Einrichtungen zum Festlegen des Drehgestelles erhält man, wenn diese aus Kreisbogenschlitzen im Drehgestell und diese durchgreifende und in das Traggestell eingreifende Feststellbolzen bestehen.

Selbstverständlich sind die Antriebe und den Bewegungsrichtungen zugeordnete Endschalter in üblicherweise mit einem Werkzeugmaschinen-Steuergerät verbunden.

Die Erfindung soll nun anhand der beigefügten Figuren näher erläutert werden. Es zeigen.

Fig.1 eine Aufsicht auf die Bearbeitungsvorrichtung (X, Y-Ebene),

Fig.2 eine Seitenansicht (X, Z-Ebene),

Fig.3 eine weitere Seitenansicht (Y, Z-Ebene) und

Fig.4 einen Teilschnitt längs der Linie IV-IV in Fig. 1.

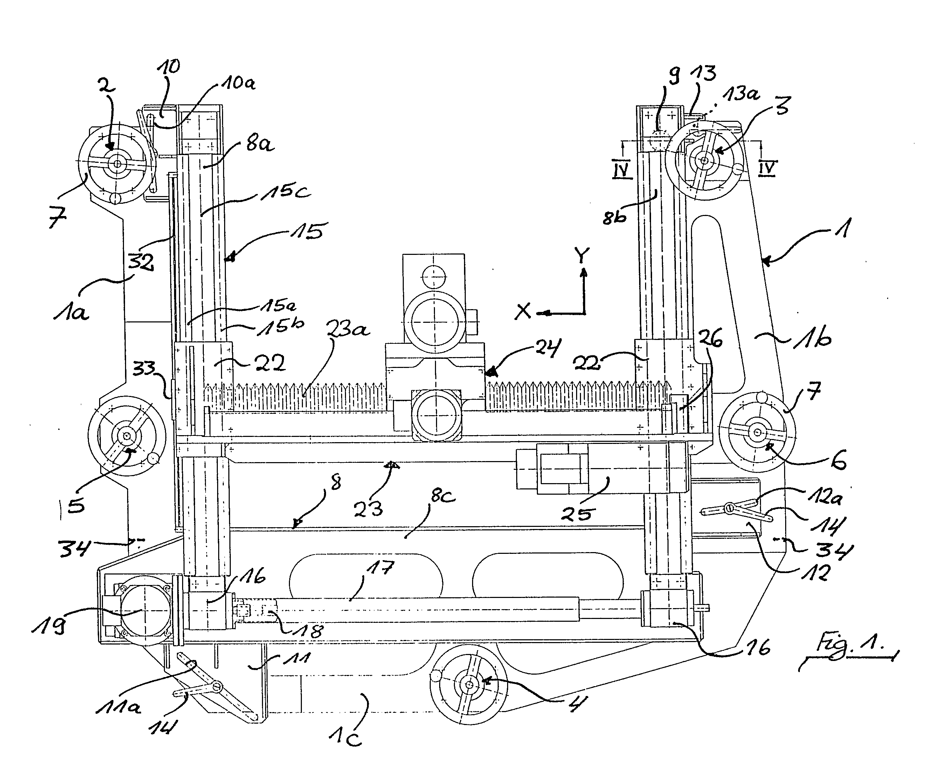

Die erfindungsgemäße Vorrichtung weist ein U-förmiges Traggestell (1) mit zwei Schenkeln (1a) und (1b) und einem diese verbindenden Verbindungsabschnitt (1c) auf. An den freien Enden der Schenkel (1a) und (1b) sowie etwa in der Mitte des Verbindungsabschnittes (1c) sind höhenverstellbare Stützen (2, 3 bzw. 4) angeordnet, die eine Höhenverstellung und Ausrichtung des Traggestelles (1) auf eine Unterlage ermöglichen. Zur Sicherung dieser Einstellung sind - wie insbesondere aus der Fig. 1 ersichtlich - auf den Schenkeln (1a) und (1b) weitere höhenverstellbare Stützen (5 bzw. 6) vorgesehen. Bei der gezeigten Ausführungsform sind die Stützen durch Drehung von Handrädern (7) an deren oberem Ende verstellbar.

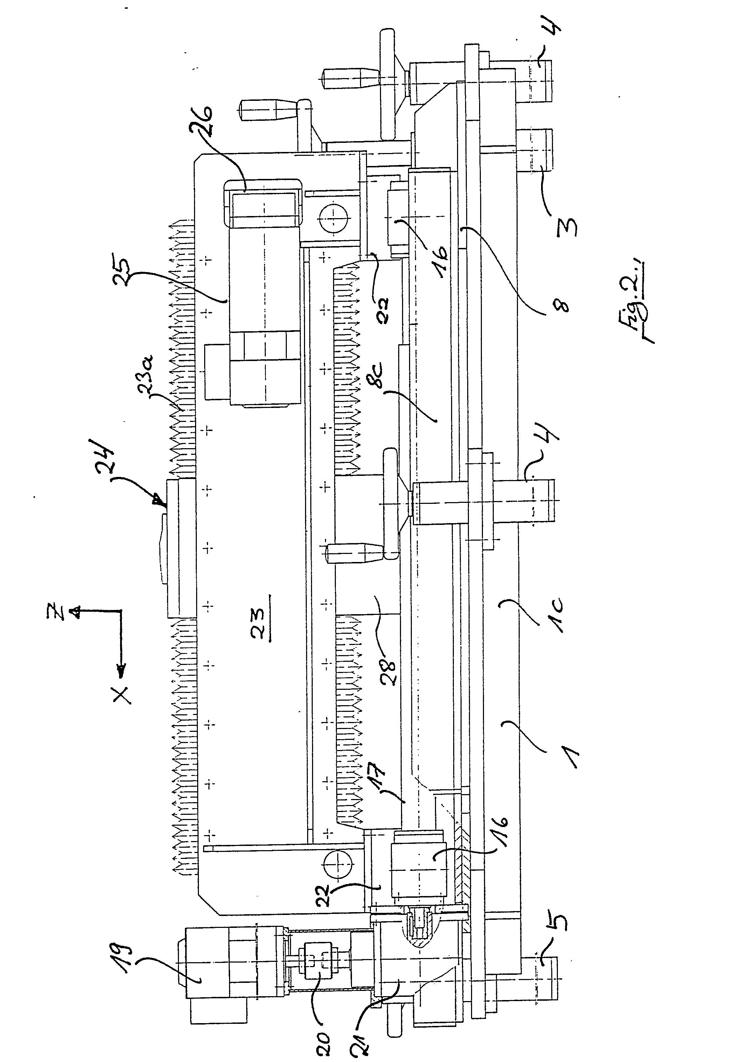

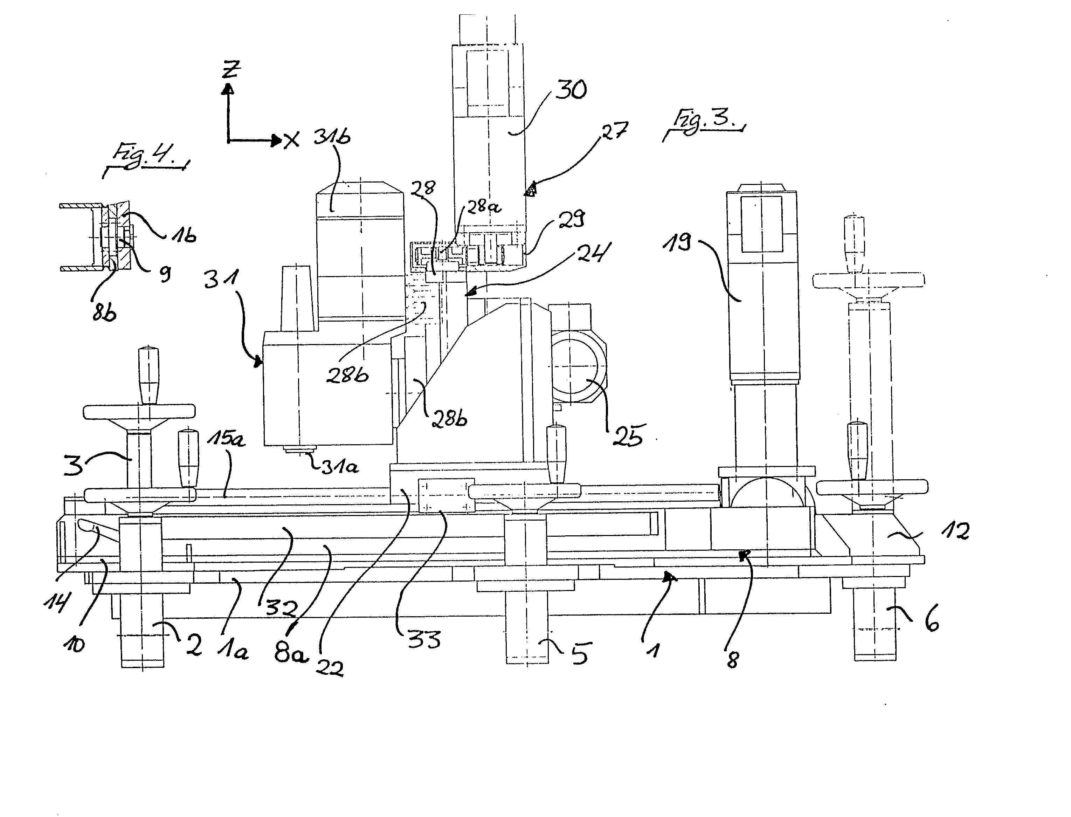

Auf der planen Oberfläche des Traggestells (1) ist ein U-förmiges Drehgestell (8) gleitend und - schwenkbar gelagert. Das U-förmigen Traggestell (8) besteht aus zwei Schenkeln (8a) und (8b) und einem diese verbindenden Verbindungsabschnitt (8c). Mittels eines die freien Ende der beiden Schenkel (1b) und (8b) durchgreifenden Schwenkbolzen (9) (vgl. insbesondere Fig.4) wird der Schwenkeingriff aufgebaut.

Zum Festlegen einer eingestellten Schwenkstellung sind an dem Traggestell (8) Zungen (10, 11, 12 und 13) ausgebildet, die zur Gleitfläche des Traggestelles gehören. In den Zungen sind auf die Schwenkachse (9) ausgerichtete bogenförmige Schlitze (10a, 11a, 12a und 13a) ausgebildet, die jeweils von einem in entsprechende Teilbereiche des Traggestelles eingreifende und mit einem Handgriff versehene Feststellbolzen (14) durchsetzt sind.

Auf den Schenkeln (8a) und (8b) sind an sich bekannte und sich parallel zu den Schenkeln erstreckende Spindelantriebe (15) vorgesehen, die zwei Führungsstangen (15a) und (15b) mit kreisförmigen Querschnitt und eine nur schematisch dargestellte, abgedeckte Spindel (15c) aufweisen.

An ihren in der Fig. 1 unteren Enden sind die Spindeln mit Umlenkgetrieben (16) verbunden, die ihrerseits durch eine in einem Schutzrohr (17) angeordnete und sich längs des Verbindungsabschnittes (8c) erstreckende Welle (18) starr gekoppelt sind.

Die Schenkel (8a) und (8b) erstrecken sich in Y-Richtung, während sich die Welle (18) in X-Richtung erstreckt.

Mit dem dem Schenkel (8a) zugeordneten Umlenkgetriebe (16) steht ein Antriebsmotor (19) über eine Kupplung (20) und ein Untersetzungsgetriebe (21) antriebsmäßig in Verbindung. Der Motor erstreckt sich im wesentlichen in der Richtung der dritten Koordinate (Z).

Mit den Spindeln (15c) und den Führungsstangen (15a) und (15b) stehen zwei Schlittenträger (22) antriebsmäßig und in einem eine Verschiebung ermöglichenden in Eingriff. Die beiden Schlittenträger (22) tragen einen sich parallel zum Verbindungsabschnitt (8c) erstreckenden Schlitten (23), der seinerseits einen längs des Schlittens verschiebbaren Werkzeugträger (24) trägt. Der Werkzeugträger (24) ist wiederum formschlüssig gehalten und über eine nicht gezeigte Spindel angetrieben. Die Spindel wird von einem Antriebsmotor (25) unter Zwischenschaltung eines Untersetzungsgetriebes (26) in X-Richtung verschoben.

Zu dem Werkzeugträger (24) gehört eine Antriebsbaugruppe (27) für die Bewegung in Z-Richtung, die insgesamt in X-Richtung längs des Schlittens verschiebbar ist. Diese Antriebsbaugruppe besteht aus einer Spindelanordnung (28) mit Spindel (28a), die über ein Untersetzungsgetriebe (29) und einem Antriebsmotor (30) her angetrieben wird.

Die Baugruppe bestehend aus Schlitten (23) mit sich in Schlittenlängsrichtung erstreckender Spindel und aus der Spindelanordnung (28) wird von der Firma Föhrenbach AG, Tannenwiesenstraße 3, CH-8570 Weinfelden, Schweiz unter der Produkt-Nr. SS 200.920.600; R 18 $\times$ 5 GG 26 vertrieben, so daß eine genauere Beschreibung nicht erforderlich ist. Die Spindelanordnungen (15) sind ebenfalls erhältlich und werden von der obigen Firma unter der Produkt-Nr. SS 200.420.150; R 18 $\times$ 5 GG 26 vertrieben. Zu der Spindelanordnung (28) gehört auch eine Tragplatte (28b) an der eine Werkzeugbaugruppe (31) mit Werkzeugspindel (31a) und Antriebsmotor (31b) befestigt ist.

Bei der gezeigten Ausführungsform (vgl. insbesondere Fig. 3) erstreckt sich die Achse des Werkzeuges in Z-Richtung. Es ist auch möglich, unter Zwischenschaltung einer nicht gezeigten Zwischenplatte, die Baugruppe (31) so an der Tragplatte (28b) zu befestigen, daß sich die Werkzeugachse, z.B. die Fräserachse senkrecht zur Z-Richtung, d.h. in der der X-Y-Ebene erstreckt.

Dabei besteht die Wahl zwischen X-oder Y-Richtung.

Auf dem Schenkel (8a) ist ein Meßmaßstab (32) angeordnet, der von einem mit dem zugeordneten Schlittenträger (22) getragenen Meßwertaufnehmer (33) abtastbar ist.

Wie insbesondere aus den Fig.1 und 2 ersichtlich ist, ist der Antriebsmotor (25) nebst Getriebe (26) an dem dem Schenkel (8b) zugeordneten Ende des Schlittens (23) angeordnet, während der Antrieb (19) mit zugeordneter Kupplung und Getriebe (21) dem unteren Ende des Schenkels (8a) zugeordnet ist. In Transportstellung wird der Schlitten in seine in der Fig.3 untere Lage zurückgefahren, so daß ein gewisser Ausgleich zwischen den Gewichten (19) und (25) stattfinden kann. Wenn dann an den gestrichelten Stellen (34) an den Schenkeln (1a) und (1b) Ösen für einen Tragbügel vorgesehen sind, kann die Vorrichtung mit ausgeglichener Gewichtsverteilung an ihre Einsatzstelle transportiert werden. Danach wird das Traggestell (1) so auf die Unterlage gesetzt, daß für die in der Fig.1 gezeigte Anordnung sich der Einsatzbereich des Werkzeuges zwischen den Schenkeln befindet. Durch Betätigung der Stützen (2, 3, 4) erfolgt eine Höhenausrichtung des Traggestelles (1). Die erreichte Ausrichtung wird durch Einstellen der Stützen (5) und (6) gesichert. Danach erfolgt nach Lösen der Schwenkhebel (14) - falls erforderlich - eine Ausrichtung des Drehgestells (8) auf dem Traggestell (1). Nach Einstellung der gewünschten Winkellage wird das Drehgestell (8) auf dem Traggestell (1) gesichert.

Danach werden die Antriebe und die nicht gezeigten Endschalter über eine Steckverbindung mit dem nicht gezeigten Steuergerät verbunden und die transportable Bearbeitungsmaschine befindet sich in ihrem Einsatzzustand.

Wenn die Werkzeugbaugruppe (31) so befestigt wird, daß sich das Werkzeug z.B. in Y-Richtung erstreckt, kann mit der transportablen Bearbeitungsmaschine auch an einer sich in X, Z-Ebene gearbeitet werden, vor der die Bearbeitungsvorrichtung angeordnet wird.

Die Verschiebeeinrichtung des Schlittens (23) bzw. der Baugruppe (28) sind durch Schutzbalgen (23a) bzw. (28c) gegen das Eindringen von Staub oder Bearbeitungsspänen gesichert.

Die höhenverstellbaren Stützen (2, 3, 4, 5, 6) können von verschiedener Bauart sein. vorzugsweise werden aber die von der Firma Rose & Krieger, Zum Industriehafen 21, in 4950 Minden unter der Nr. EWTH 40/500 - 7.2400506.2110 vertriebenen Stützen eingesetzt.

Die Maschine kann in beliebigen Lagen im Raum zum Einsatz kommen, wenn ihre Stützen in der angegebenen Weise mit Haft-oder Halteeinrichtungen versehen sind. Zu diesen kann auch eine gesonderte nicht mit dem Werkstück verbundene Stützkonstruktion gehören.

**Ansprüche**

1. Bearbeitungsvorrichtung mit einem in drei zueinander senkrechten Koordinaten (X, Y, Z) mittels dreier Linearführungen (23, 15, 28) und zugeordneten Antrieben (25, 19, 30) auf einem Vorrichtungsrahmen verschiebbaren Werkzeugträger (24), **dadurch gekennzeichnet,** daß der Vorrichtungsrahmen (1, 8) im wesentlichen U-förmig ausgebildet ist, daß der Werkzeugträger (24) formschlüssig gehalten auf einem sich quer zu den Schenkeln (1a, 8a; 1b, 8b) erstreckenden Schlitten (23) in der ersten Koordinatenrichtung (X) und der dritten Koordinatenrichtung (7) verschiebbar ist, der mit seinen Enden (22) formschlüssig auf den Schenkeln (1a, 8a; 1b, 8b) des Rahmens gehalten längs der Schenkel in der zweiten Koordinatenrichtung (Y) verschiebbar ist.

2. Vorrichtung nach Anspruch 1, **dadurch gekennzeichnet,** daß der Vorrichtungsrahmen aus einem U-förmigen Traggestell (1) und einem U-förmigen Drehgestell (8) besteht, wobei das Drehgestell (8) auf der Oberfläche des Traggestells (1) gleitend aufsitzt und im Bereich des freien Endes des zugeordneten Schenkels (1b) des Traggestells (1) schwenkbar (9) gelagert ist und der Werkzeugträger (24) auf dem Drehgestell (8) in den drei Koordinatenrichtungen (X, Y, Z) verschiebbar angeordnet ist, und daß an den beiden Gestellen (1, 8) angreifende Einrichtungen (10a-13a, 14) zum Festlegen des Drehgestells (8) auf dem Traggestell (1) in einer vorgegebenen Schwenkstellung vorgesehen sind.

3. Vorrichtung nach Anspruch 1 oder 2, **dadurch gekenennzeichnet,** daß zumindest an den freien Enden der Schenkel (1a, 1b) und etwa in der Mitte des Schenkelverbindungsabschnittes (1c) des Traggestelles (1) sich in Richtung der dritten Koordinate (Z) erstreckende und in ihrer Höhe manuell oder antriebsmäßig verstellbare Stützen (2, 3, 4) vorgesehen sind.

4. Vorrichtung nach Anspruch 3, **dadurch gekennzeichnet,** daß auf jedem Schenkel (1a, 1b) des Traggestelles (1) zusätzlich jeweils eine weitere einstellbare Stütze (5; 6) vorgesehen ist.

5. Vorrichtung nach Anspruch 3 oder 4, **dadurch gekennzeichnet,** daß die Stützen mit Haft-oder Halterfüßen versehen sind.

6. Vorrichtung nach einem der Ansprüche 1 bis 5, **dadurch gekennzeichnet,** daß die freien Enden (22) des Schlittens (23) mit zwei sich längs der Schenkel (8a, 8b) des Drehgestelles (8) erstreckenden Spindeln (15c) in Antriebseingriff stehen, die synchron antreibbar sind.

7. Vorrichtung nach einem der Ansprüche 1 bis 6, **dadurch gekennzeichnet,** daß die Spindeln (15c) über Umlenkgetriebe (16) und eine die beiden Getriebe (16) miteinander koppelnde und sich längs des Verbindungsabschnittes (8c) der Schenkel (8a, 8b) erstreckende Welle (18) miteinander gekoppelt sind und die Spindeln (15c) über einen dem einen Getriebe (16) zugeordneten Antriebsmotor (19) antreibbar sind.

8. Vorrichtung nach einem der Ansprüche 1 bis 7, **dadurch gekennzeichnet,** daß der Spindelantrieb (19) an dem gebundenen Ende des einen Schenkels (8a) des Drehgestelles (8) angeordnet ist und der Antrieb (25) für die Bewegung des Werkzeugträgers (24) in Richtung der ersten Koordinate (X) längs des Schlittens (23) an dem Ende des Schlittens angeordnet ist, das auf dem anderen Schenkel (8b) des Drehgestelles verschiebbar ist.

9. Vorrichtung nach einem der Ansprüche 1 bis 8, **dadurch gekennzeichnet,** daß sich längs des einen Schenkels des Drehgestelles (8) ein Meßstab (32) erstreckt, der von einem auf dem einen Ende des Schlittens (23) angeordneten Meßwertaufnehmer (33) abtastbar ist.

10. Vorrichtung nach einem der Ansprüche 1 bis 9, **dadurch gekennzeichnet,** daß eine Werkzeugbaugruppe (31) einschließlich einer Werkzeugspindel (31a) und eines Werkzeugantriebes (31b) so auf dem Werkzeugträger (24) angeordnet ist, daß sich die Werkzeugachse in Richtung der dritten Koordinate (Z) erstreckt.

11. Vorrichtung nach einem der Ansprüche 1 bis 10, **dadurch gekennzeichnet,** daß an dem Traggestell (1) ein sich zwischen dessen Schenkeln (1a, 1b) erstreckender und an diesen - schwenkbar angelenkter Handhabungsbügel vorgesehen ist.

12. Vorrichtung nach einem der Ansprüche 1 bis 11, **dadurch gekennzeichnet,** daß die Einrichtungen zum Festlegen des Drehgestelles (8) aus Kreisbogenschlitzen (10a-13a) im Drehgestell (8) und diese durchgreifende und in das Traggestell (1) eingreifende Feststellbolzen (14) bestehen.

Fig. 1.

Fig. 2.

0 248 184

Fig. 3.

Fig. 4.